# EUROPÄISCHE PATENTSCHRIFT

(11) **EP 2 740 618 B1**
(45) Veröffentlichungstag und Bekanntmachung des Hinweises auf die Patenterteilung: **22.11.2017**
(21) Anmeldenummer: 12008116.1
(22) Anmeldetag: 05.12.2012
(51) Int. Cl.: B60D 5/00

(54) **Fahrzeug umfassend mindestens zwei gelenkig miteinander verbundene Fahrzeugteile**
Vehicle comprising at least two vehicle parts with a pivoted connection
Véhicule comprenant au moins deux pièces de véhicule reliées de manière articulée

(43) Veröffentlichungstag der Anmeldung: 11.06.2014
(73) Patentinhaber: Hübner GmbH & Co. KG, 34123 Kassel (DE)
(72) Erfinder: Jünke, Volker, 34123 Kassel (DE)
(74) Vertreter: Patentanwälte Walther Hinz Bayer PartGmbB

(56) Entgegenhaltungen:
- EP-A1- 1 810 852
- EP-A1- 2 149 462
- EP-A1- 2 149 463
- EP-A1- 2 335 995
- DE-U1-202005 008 670

## Beschreibung

Die Erfindung betrifft ein Fahrzeug umfassend zwei gelenkig miteinander verbundene Fahrzeugteile, z. B. eine Straßenbahn oder einen Bus, wobei zur Überbrückung des Abstandes zwischen den beiden Fahrzeugteilen eine Abdeckung vorgesehen ist, die in sich elastisch nachgiebig ist, wobei die aus einem Stoff ausgebildete Abdeckung mindestens ein Profil aufweist.

Aus dem Stand der Technik sind Gelenkfahrzeuge, beispielsweise Straßenbahnen oder U-Bahn Züge aber auch Gelenkbusse bekannt, die sich dadurch auszeichnen, dass zwischen den einzelnen durch ein Gelenk verbundenen Fahrzeugteilen eine Übergangseinrichtung angeordnet ist. Diese Übergangseinrichtung umfasst eine Übergangsbrücke oder Übergangsplattform, die insbesondere durch einen in Form eines im Querschnitt tunnelförmigen Balges umspannt ist, wobei an den Stirnseiten der Wagenkästen der beiden gelenkig miteinander verbundenen Fahrzeuge der tunnelförmige Balg befestigt ist. Der tunnelartige Balg kann hierbei als Falten- oder Wellenbalg ausgebildet sein, er kann darüber hinaus auch doppelwandig, beispielsweise als Doppelwellenbalg hergestellt sein. Solche Bälge weisen in bestimmten Abständen umlaufende Profilrahmen auf, die im Bodenbereich geöffnet werden können. Insbesondere bei Faltenbälgen, die bevorzugt in Gelenkbussen eingesetzt werden, befindet sich auf jedem außen liegenden Faltenscheitel ein solcher Profilrahmen aus Aluminium, der mit dem den Faltenbalg bildenden Stoff fest und dauerhaft verbunden ist. Die Verbindung geschieht im Einzelnen dadurch, dass die Profilrahmen, die im Querschnitt U-förmig ausgebildet sind, mit ihren Schenkeln auf die durch sie verbundenen Stoffbahnen aufgepresst werden, wobei zusätzlich in die Schenkel Sicken eingefügt werden, um für eine dauerhafte und feste Verbindung zu sorgen.

Es ist allerdings auch so, dass diese Bälge bei Schienenfahrzeugen einen erheblichen Abstand zur Wagenkastenwand aufweisen, was aerodynamisch ungünstig ist.

Es ist insofern aus der DE 20 2009 004 538 U1 bereits bekannt zur Verbesserung der Aerodynamik zusätzlich zu einem innen liegenden Balg eines Übergangs zwischen zwei gelenkig miteinander verbundenen Fahrzeugen bündig zu der Außenhaut des Fahrzeugs ein flächiges Spannelement vorzusehen, dessen Enden über zwei an den Wagenkästen angeordnete Walzen geführt sind, wobei die Enden des Spannelements durch eine Feder miteinander verbunden sind. Hierdurch wird es ermöglicht, dass wenn ein solches Fahrzeug durch eine Kurve fährt, auf der Kurvenaußenseite entsprechend Material durch Längung der Feder bereitzustellen, wohingegen auf der Innenseite aufgrund der Feder das Spannelement zusammengezogen wird. Man erhält mit einer solchen Konstruktion durchaus bei geringen Geschwindigkeiten eine verbesserte Aerodynamik. Bei höheren Geschwindigkeiten ist es allerdings so, dass das flächenförmige Spannelement sich nach außen ausbaucht. Dies, obwohl das Spannelement selbst in sich nicht elastisch nachgiebig ist, sondern allein aufgrund der Tatsache, dass die Enden dieses Spannelementes durch eine Feder miteinander verbunden sind, um, wie bereits erläutert, Kurvenfahrten zu ermöglichen.

Aus der EP 2 353 894 A2 ist ein Wellenbalg eines Übergangs zwischen zwei gelenkig miteinander verbundenen Fahrzeugen bekannt, der U-förmige Wellen aufweist. Hierbei weisen die Wellen zwischen ihren beiden Schenkeln einen Steg auf, der im Wesentlichen eben ausgebildet ist. Das heißt, dass die Schenkel und der Steg in im Wesentlichen neutraler Stellung des Balgs im rechten Winkel zueinander verlaufen. Eine solche Gestaltung eines Wellenbalges wird insbesondere bei Hochgeschwindigkeitszügen eingesetzt, und zwar in der Gestalt, dass ein solcher Balg so weit außen an der Stirnseite der beiden Fahrzeugteile befestigt ist, dass der Balg konturgleich mit der jeweiligen Außenwand des Fahrzeugs abschließt. Auch bei diesem Balg ist es so, dass im Bereich der Schenkel des Balges umlaufende Profilrahmen vorgesehen sind, die im Querschnitt etwa U-förmig ausgebildet sind, und die die Schenkel zweier Wellen eines solchen Wellenbalges klemmend dauerhaft erfassen, wie dies bereits zuvor beschrieben worden ist. Ein solcher Balg hat durchaus Vorzüge, und zwar, wie bereits ausgeführt, insbesondere in aerodynamischer Hinsicht.

Aus der EP 1810852 A1 ist ein Balg eines Übergangs zwischen zwei gelenkig miteinander verbundenen Fahrzeugen bekannt, wobei der Balg mehrere hintereinander angeordnete U-förmig umlaufende Rahmen aufweist, die im Bereich ihrer Enden im Bodenbereich nach innen ragende Übergangsbögen zeigen, wobei der Balgboden im Bereich dieser Übergangsbögen mit dem Balg verbunden ist. Der Balgboden weist ein Bodentuch auf, wobei das Bodentuch mehrere hintereinander angeordnete Schlaufen zur Aufnahme jeweils einer im Querschnitt U-förmigen Leiste zeigt. Die Balgrahmen sind als Profile im Querschnitt U-förmig ausgebildet, wobei der Abstand der Schenkel eines Balgrahmens derart ist, dass durch den Profilrahmen des Balges die Leiste des Bodentuches aufnehmbar ist. Im Bereich der Überlappung der Leiste mit dem Profilrahmen sind zwei nebeneinander angeordnete Öffnungen vorgesehen, durch die die Zähne einer Federspange ragen, die auf dem Profilrahmen aufsitzt, und so die Leiste mit dem Profilrahmen formschlüssig verbindet.

Aus der DE 10 324 524 B3 ist ein textiles Flächengebilde bekannt, das zur Herstellung eines Balges verwendet werden kann, wobei das textile Flächengebilde aus in sich elastisch nachgiebigen Fäden hergestellt ist. Wie ein solcher Balg im Einzelnen ausgebildet sein soll, hierüber lässt sich diese Schrift nicht aus.

Aus der DE 10 2011 003 025 A1 ist eine Verkleidung zwischen wenigstens zwei Wagenkästen bekannt, die über einen Wagenübergangsbereich verfügen, wobei die Verkleidung aus einer Stoffbespannung aus einem elastischen Material ausgebildet ist, wobei zudem Gegenstand der Anmeldung ist, dass diese Stoffbespannung bündig zur Außenhaut des Schienenfahrzeuges an den Stirnseiten der Wagenkästen angebracht ist. Im Einzelnen ist in diesem Zusammenhang vorgesehen, dass die Verkleidung durch mehrere Halteleisten an den benachbarten Wagenkästen befestigt ist, wobei sich zu diesem Zweck an den beiden Befestigungsenden der Verkleidung ein schlauchförmiger Saum zur Aufnahme einer Randverstärkung befindet, die aus einem Kunststoff- oder Metallstab besteht. Der durch die eingelegte Randverstärkung geformte Keder wird in eine Führungsnut eingelegt, die aus einer geeigneten Profilierung des Wagenkastens und einer aufgesetzten Halteleiste gebildet wird. Hierdurch erfolgt die Befestigung der Verkleidung an dem jeweiligen Wagenkasten.

Nach wie vor besteht ein immenses Interesse daran, nach Möglichkeit außenbündig eine Verkleidung oder Abdeckung des Zwischenraums zwischen zwei gelenkig miteinander verbundenen Fahrzeugen vorzunehmen, insbesondere im Schienenfahrzeugbereich, und hier insbesondere bei Hochgeschwindigkeitszügen.

Es wurde bereits darauf hingewiesen, dass durchaus bekannt ist, Bälge und zwar sowohl Wellen- als auch Faltenbälge mit Balgrahmen zu versehen, um diese Bälge steif zu gestalten. Dies vor dem Hintergrund, dass die Bälge nicht durchhängen sollen und auch vor dem Hintergrund, dass bei hohen Geschwindigkeiten, und insbesondere bei Tunneldurchfahrten oder auch wenn sich Züge mit hoher Geschwindigkeit begegnen, nicht durch Druckstöße der Balg übermäßig verformt wird. Hierbei ist es so, dass im Bereich des größten Abstandes des Balges von der Stirnseite des Fahrzeugs, also in der Balgmitte die seitliche Auslenkung aufgrund von Sog- oder Druckeinwirkungen am größten ist. Am geringsten ist sie naturgemäß in unmittelbarer Nähe zur Stirnwand des Fahrzeugs.

Darüber hinaus ist, wie dies eben bereits erörtert worden ist, bekannt, insbesondere bei Hochgeschwindigkeitsschienenfahrzeugen wie dem ICE zwei ineinander lagernde Bälge vorzusehen, unter anderem um zu verhindern, dass die bereits zuvor erwähnten Druckstöße sich bis in den Fahrgastraum fortsetzen.

Ausgehend hiervon liegt der Erfindung die Aufgabe zugrunde, ein Fahrzeug bereitzustellen, das strömungsgünstig ausgebildet ist, insbesondere im Hinblick auf die Überbrückung des Abstandes oder Zwischenraumes zwischen zwei gelenkig miteinander verbundenen Fahrzeugen z. B. eines Schienenfahrzeuges, wobei die Abdeckung auch bei hoher Geschwindigkeit im Wesentlichen außenhautbündig verlaufen soll. Darüber hinaus soll eine solche Abdeckung preiswert sein. Eine weitere Anforderung besteht darin, ein übermäßiges Ausbauchen zu verhindern bzw. das Ausbauchen der Abdeckung zu vergleichmäßigen.

Zur Lösung der Aufgabe wird erfindungsgemäß vorgeschlagen, dass zur lösbaren Verbindung der aus Stoff ausgebildeten Abdeckung mit dem mindestens einen Profil, das Profil eine Nut aufweist, wobei die Abdeckung in der Nut einliegend durch einen Keder fixiert ist, wobei das mindestens eine Profil an jeder beliebigen Stelle der Abdeckung angebracht werden kann. Unter einer lösbaren Verbindung wird in diesem Zusammenhang eine Verbindung verstanden, bei der die einzelnen die Verbindung bildenden Teile ohne Beschädigung oder Zerstörung beliebig oft gelöst und wieder verbunden werden können.

Die Abdeckung aus einem Stoff, die, wie bereits ausgeführt, elastisch nachgiebig ausgebildet ist, weist eine Dehnfähigkeit von mehreren 100 % auf, wenn diese aus entsprechend elastischen Fäden ausgebildet ist, wie z. Weiter auf Seite 6 der ursprünglichen Anmeldung B. Fäden oder Garnen aus einem vernetzten Silikonkautschuk, die Modulwerte von 20 bis 100 cN/800 % insbesondere von 20 bis 80 cN/800 % Dehnung aufweisen.

Durch die lösbare Anbringung der Profile wird nun erreicht, dass der Abstand der Profile variabel gewählt werden kann, und zwar unabhängig von der Fertigung. Dies deshalb, weil die Profile erst bei der Konfektionierung angesetzt werden. Insofern lässt sich die Abdeckung als Webware oder Wirkware als Meterware in beliebiger Länge herstellen, zuschneiden und z. B. zu einem tunnelartigen Gebilde vernähen oder verkleben. Erst dann werden die Profile aufgesetzt. Dies ermöglicht eine preiswerte Fertigung. Denn bei der Balgherstellung ist es hingegen bislang so, dass die Profilrahmen unmittelbar während des Herstellungsprozesses in gleichen Abständen angebaut werden. Die Möglichkeit der variablen Anbringung der Profile bedeutet insofern auch, dass an den Stellen, an denen die größte Auslenkung der Abdeckung aus Stoff zu erwarten ist, eine größere Anzahl von Profilen vorgesehen werden kann, als in den Bereichen, die den Druckstößen in geringerem Maße ausgesetzt sind, wie dies der Fall ist unmittelbar in der Nähe der Stirnwand der einzelnen Fahrzeugteile. Das heißt, dass zur Mitte des Balges hin die Anzahl der Profile zunimmt und zum Ende hin abnimmt. Die Anzahl der Profile kann in der Summe insofern gleich bleiben, jedoch kann durch die Variation in der Anordnung der Profile die Abdeckung jeweils individuell und auch auf die Einsatzbedingungen abgestellt gestaltet sein. Das heißt, der Balg behält insbesondere bei schneller Fahrt, bei der erhebliche Sog- und Druckkräfte auf den Balg einwirken, einen über die Länge des Balges im Wesentlichen gleichförmigen, außenhautbündigen Konturverlauf, da, wie bereits ausgeführt, die Profile individuell an der Abdeckung anbringbar sind, und zwar auch noch bei der Montage des Balges am Fahrzeug.

Vorteilhafte Merkmale und Ausgestaltung zu der Erfindung ergeben sich aus den Unteransprüchen.

So ist insbesondere vorgesehen, dass das Profil eine Nut aufweist, und zwar insbesondere eine umlaufende Nut, wobei die Abdeckung, z. B. ein Stoff, der ein Gewebe, Gewirk oder Gestrick sein kann, in der Nut einliegend durch einen Keder fixierbar ist. Hieraus wird deutlich, dass an jeder beliebigen Stelle des Balges ein entsprechendes Profil anbringbar ist. In diesem Zusammenhang ist vorgesehen, dass das Profil aus Metall, insbesondere Aluminium, ausgebildet ist. Der Keder, der durch das Profil aufnehmbar ist, ist entweder einschiebbar oder aber der Keder kann in das Profil eingepresst werden. Es hat sich als vorteilhaft herausgestellt, wenn der Keder gummielastisch und ein in sich geschlossener Ring ist, da er dann umlaufend in die Nut des Profiles eingepresst werden kann. Ein weiterer Vorteil dieser Ausgestaltung liegt darin, dass das im Bereich des Bodens durchtrennte Profil, durch den geschlossenen Keder zusammengehalten wird. Das Profil ist im Bereich des Bodens üblicherweise zu öffnen, um den Balg über das Gelenk stülpen zu können. Durch den geschlossenen, gummielastischen Keder werden die Enden des Profiles zusammengehalten, sodass auf gesonderte Verschlussmittel verzichtet werden kann.

Denkbar ist allerdings auch die Abdeckung nur flächenförmig auszugestalten, wie dies bereits vom Grundsatz her aus der DE 20 2009 004 538 U1 bekannt ist. Auch in diesem Zusammenhang kann die Abdeckung mit Profilen versehen sein, die Profile sind allerdings vorteilhaft ebenfalls, wie bei der balgförmigen Abdeckung, als umlaufende Profilrahmen ausgebildet, da ansonsten die Gefahr des Durchhängens aufgrund des zusätzlichen Gewichts durch die Profile besteht. Insofern besteht die Möglichkeit alternativ oder additiv bei einer Abdeckung aus z. B. Stoff, die seitlich den Abstand oder Zwischenraum zwischen zwei Fahrzeugen überbrückt, die Abdeckung durch einen Galgen auf dem Dach des Fahrzeugs zu halten, oder aber wenn umlaufende Profile, also tunnelförmig umlaufende Profile verwendet werden, diese am Gelenk abzustürzen.

Die Abdeckung selbst weist, wie ausgeführt, einen Stoff auf, wobei der Stoff ein Gewebe, Gestrick oder Gewirk sein kann. Der Stoff ist allerdings wenigstens in einer Raumrichtung elastisch nachgiebig ausgebildet. Dies kann bei einem Gewebe dadurch bewirkt werden, dass entweder die Schuss- oder die Kettfäden als elastisch nachgiebige Fäden ausgebildet sind, der jeweils andere Faden jedoch aus einem im Wesentlichen unelastischen Material. Denkbar ist allerdings auch, den Stoff insgesamt aus elastischen Fäden auszubilden.

Nach einem vorteilhaften Merkmal ist der Stoff mit einem Elastomer, beispielsweise mit Silikon beschichtet, um ihn flüssigkeitsdicht zu gestalten. Es wurde allerdings bereits darauf hingewiesen, dass bei einem innen liegenden Balg, der von der Abdeckung tunnelförmig umgeben ist, es nicht darauf ankommt, dass diese Abdeckung absolut dicht ist, und zwar insbesondere flüssigkeitsdicht ist. Es reicht vielmehr aus, und dies ist an anderer Stelle bereits erwähnt worden, dass die Gestaltung der Spanneinrichtung derart ist, dass das Fahrzeug insgesamt eine gute Aerodynamik erhält, was insbesondere auch dadurch begünstigt wird, wenn der Abstand zwischen zwei Fahrzeugen im Wesentlichen außenhautbündig durch eben eine solche Abdeckung überbrückbar ist.

Zu der Anordnung einer tunnelförmigen Abdeckung im Bereich der Stirnwand der Fahrzeuge ist zu bemerken, dass sich als vorteilhaft herausgestellt hat, wenn die Abdeckung bei Stillstand des Zuges nicht unmittelbar an die Außenwand des Zuges angrenzt. Es wurde bereits darauf hingewiesen, dass die Abdeckung ähnlich der Kontur der Wagenkästen im Wesentlichen rechteckförmig ausgebildet ist. Das heißt, die Schenkel bilden hierbei die Seitenwand, wobei die Stege das Dach und den Boden bilden. Die Schenkel sind hierbei wesentlich länger, als die Stege. Insofern hat bei hoher Geschwindigkeit die balg- oder tunnelförmige Abdeckung das Bestreben im Bereich der Schenkel nach außen zu streben, sich hingegen im Dachbereich und im Bodenbereich zusammenzuziehen. Das heißt, der Balg hat das Bestreben bei schneller Fahrt eine kreisbogenförmige Gestalt anzunehmen, um die angreifenden Kräfte möglichst gering zu halten. Vor diesem Hintergrund hat sich als vorteilhaft herausgestellt, wenn der Balg im Bereich der Seitenwände des Fahrzeugs etwa 3 bis 4 cm zurückverspringt, hingegen im Dachbereich und bevorzugt auch im Bodenbereich allerdings bis an die Außenkontur des Fahrzeuges heranreicht. Bei hoher Geschwindigkeit wird der Balg dann versuchen, die zuvor beschriebene Kreisform anzunehmen, was bedeutet, dass er dann im Bereich der Seitenwand in etwa bündig mit dem Wagenkasten verläuft, zumindest über einen großen Teil seiner Fläche.

Anhand der Zeichnungen wird die Erfindung nachstehend beispielhaft näher erläutert.
- Fig. 1: zeigt schematisch ein Gelenkfahrzeug in einer Seitenansicht;
- Fig. 2a: zeigt einen Schnitt durch den Übergang zwischen den beiden Fahrzeugen mit einer tunnelförmigen Abdeckung;
- Fig. 2b: zeigt den Schnitt gemäß Fig. 2a, wobei die Abdeckung lediglich im Bereich der Seitenwände eines Zuges vorgesehen ist;
- Fig. 3: zeigt die Ausbildung der Abdeckung mit den mit der Abdeckung verbundenen Profilen.

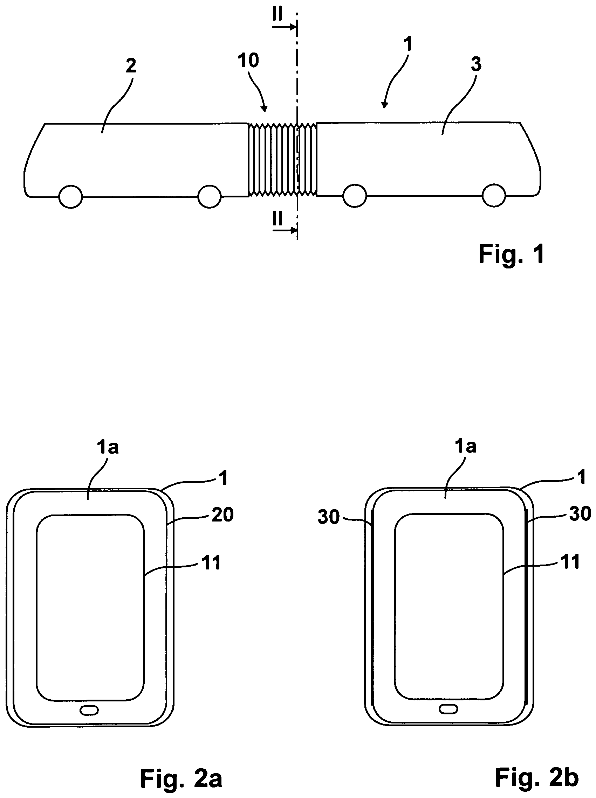

Gemäß Fig. 1 ist das insgesamt mit 1 bezeichnete Gelenkfahrzeug mit einem zwischen den beiden Fahrzeugteilen 2 und 3 angeordneten Übergang 10 versehen. Der Übergang 10 ist in zwei verschiedenen Ausführungsformen in den Figuren 2a und 2b ohne Plattform oder Brücke dargestellt. Der Übergang 10 umfasst jeweils einen Innenbalg 11, der an der Stirnwand 1a des Wagenkastens des Fahrzeugteils 2, 3 angeordnet ist. Hierbei besteht ein nicht unerheblicher Abstand zur Außenkontur des Wagenkastens 1, wie sich dies unmittelbar in Anschauung von Fig. 2a und Fig. 2b ergibt. Im Bereich der Außenkontur des Wagenkastens 1 befindet sich eine Abdeckung 20 in einer ersten Ausführungsform, wobei die Abdeckung 20 tunnelförmig umlaufend den Innenbalg 11 umgibt. Im Gegensatz dazu ist die Abdeckung 30 gemäß der Fig. 2b nur aus zwei Seitenwänden ausgebildet, es existiert keine Decke und auch kein Boden. Gegenstand der Erfindung ist nun die Verbindung der Abdeckung als Stoffbahn, die entweder beschichtet oder unbeschichtet sein kann, mit den Profilen 25.

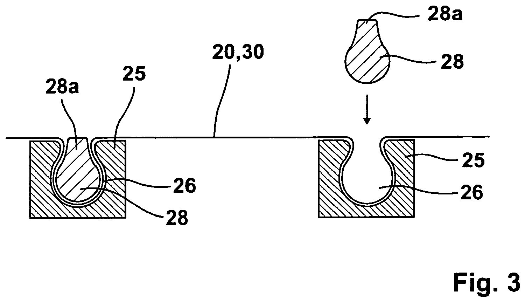

Aus der Fig. 3 ergibt sich in diesem Zusammenhang, dass das Profil 25 eine Nut 26 zeigt, in die die Stoffbahn der Abdeckung 20, 30 eingelegt wird, und mit einem Keder 28 in der Nut 26 des Profils 25 fixiert wird. Der Keder 28 ist vorteilhaft gummielastisch ausgebildet, und wird des Weiteren vorteilhaft in die Nut 26 eingepresst. Hiermit ist eine stabile Verbindung der Abdeckung in Form einer Stoffbahn, sei sie tunnelartig oder auch flächenförmig ausgebildet, mit dem Profil möglich. Gleichzeitig besteht allerdings auch die Möglichkeit, das Profil 25 in Längsrichtung der Abdeckung zu versetzen, sodass die Möglichkeit eröffnet wird, die Profile ungleichmäßig über die Länge der beispielsweise tunnelförmigen Abdeckung anzuordnen. Die Enden des Keders werden verbunden, wenn es sich nicht um einen geschlossenen Keder handelt.

Vorteilhaft weist der Keder 28 einen Kederkopf 28a auf, der dafür sorgt, dass die Abdeckung außen im Wesentlichen glatt ist und auch bleibt, da die erforderliche Dehnung während der Kurvenfahrt durch die elastische Ausbildung der Abdeckung selbst bereit gestellt wird.

Die tunnelförmig umlaufende Abdeckung 20, 30 verläuft im Bereich der Seitenwand des Wagenkastens mit einem geringen Abstand zur Seitenwand des Wagenkastens, wohingegen im Deckenbereich und auch im Bodenbereich die Abdeckung im Wesentlichen bündig mit dem Boden und der Decke des Fahrzeugs abschließt. Dies vor dem Hintergrund, wie dies bereits erläutert wurde, dass bei hohen Geschwindigkeiten die Abdeckung das Bestreben hat, sich im Querschnitt der Kreisform anzunähern. Das heißt, dass bei hohen Geschwindigkeiten die Abdeckung im Bereich der Seitenwände des Fahrzeugteils im Wesentlichen außenhautbündig verläuft, im Dach- und im Bodenbereich jedoch leicht nach innen eingezogen ist.

### Bezugszeichenliste:

- 1: Gelenkfahrzeug
- 1a: Stirnwand
- 2: Fahrzeugteil
- 3: Fahrzeugteil
- 10: Übergang
- 11: Innenbalg
- 20: Abdeckung (tunnelartig)
- 25: Profil
- 26: Nut
- 28: Keder
- 28a: Kederkopf
- 30: Abdeckung (Seitenwand)

## Patentansprüche

1. Fahrzeug (1) umfassend mindestens zwei gelenkig miteinander verbundene Fahrzeugteile (2, 3), z. B. eine Straßenbahn oder einen Bus, wobei zur Überbrückung des Abstandes zwischen den beiden Fahrzeugteilen (2, 3) eine Abdeckung (20, 30) vorgesehen ist, die in sich elastisch nachgiebig ist, wobei die aus einem Stoff ausgebildete Abdeckung mit mindestens einem Profil verbunden ist, **dadurch gekennzeichnet,**
**dass** zur lösbaren Verbindung der aus Stoff ausgebildeten Abdeckung mit dem mindestens einen Profil (25), das Profil (25) eine Nut (26) aufweist, wobei die Abdeckung in der Nut (26) einliegend durch einen Keder fixiert ist, wobei das mindestens eine Profil (25) an jeder beliebigen Stelle der Abdeckung angebracht werden kann.

2. Fahrzeug (1) umfassend mindestens zwei gelenkig miteinander verbundene Fahrzeugteile (2, 3) nach Anspruch 1,
**dadurch gekennzeichnet,**
**dass** die Abdeckung (20, 30) flächenförmig ausgebildet ist.

3. Fahrzeug (1) umfassend mindestens zwei gelenkig miteinander verbundene Fahrzeugteile (2, 3) nach Anspruch 1,
**dadurch gekennzeichnet,**
**dass** die Abdeckung (20) tunnelförmig umlaufend ausgebildet ist.

4. Fahrzeug (1) umfassend mindestens zwei gelenkig miteinander verbundene Fahrzeugteile (2, 3) nach einem der voranstehenden Ansprüche,
**dadurch gekennzeichnet,**
**dass** der Stoff als Gewebe, Gestrick oder Gewirk ausgebildet ist, wobei der Stoff in wenigstens einer Raumrichtung elastisch nachgiebig ausgebildet ist.

5. Fahrzeug (1) umfassend mindestens zwei gelenkig miteinander verbundene Fahrzeugteile (2, 3) nach einem der voranstehenden Ansprüche,
**dadurch gekennzeichnet,**
**dass** der Stoff aus elastischen Fäden ausgebildet ist.

6. Fahrzeug (1) umfassend mindestens zwei gelenkig miteinander verbundene Fahrzeugteile (2, 3) nach nach einem der voranstehenden Ansprüche,
**dadurch gekennzeichnet,**
**dass** der Stoff mit einem Elastomer beschichtet ist.

7. Fahrzeug (1) umfassend mindestens zwei gelenkig miteinander verbundene Fahrzeugteile (2, 3) nach einem der voranstehenden Ansprüche,
**dadurch gekennzeichnet,**
**dass** der Keder (28) in das Profil (25) einschiebbar ist.

8. Fahrzeug (1) umfassend mindestens zwei gelenkig miteinander verbundene Fahrzeugteile (2, 3) nach einem der voranstehenden Ansprüche,
**dadurch gekennzeichnet,**
**dass** der Keder (28) in das Profil (25) einpressbar ist.

9. Fahrzeug (1) umfassend mindestens zwei gelenkig miteinander verbundene Fahrzeugteile (2, 3) nach einem der voranstehenden Ansprüche,
**dadurch gekennzeichnet,**
**dass** das Profil (25) zur Aufnahme des Keders (28) sich quer zur Längsachse des Fahrzeugs (1) erstreckt.

10. Fahrzeug (1) umfassend mindestens zwei gelenkig miteinander verbundene Fahrzeugteile (2, 3) nach einem der Ansprüche 3 bis 9,
**dadurch gekennzeichnet,**
**dass** bei einer tunnelförmig umlaufenden Abdeckung (20, 30) das Profil (25) verschließbar ist.

11. Fahrzeug (1) umfassend mindestens zwei gelenkig miteinander verbundene Fahrzeugteile (2, 3) nach einem der voranstehenden Ansprüche,
**dadurch gekennzeichnet,**
**dass** der Keder (28) elastisch ausgebildet ist.

12. Fahrzeug (1) umfassend mindestens zwei gelenkig miteinander verbundene Fahrzeugteile (2, 3) nach einem der voranstehenden Ansprüche,
**dadurch gekennzeichnet,**
**dass** die Abdeckung (20) einen innen liegenden Balg aufweist.

13. Fahrzeug (1) umfassend mindestens zwei gelenkig miteinander verbundene Fahrzeugteile (2, 3) nach einem der voranstehenden Ansprüche,
**dadurch gekennzeichnet,**
**dass** die tunnelartige Abdeckung (20) einen radialen Abstand zur Außenwand des Fahrzeugs (1) aufweist, der der radialen Ausdehnung der tunnelförmigen Abdeckung (20) entspricht, wenn die Abdeckung (20) eine in etwa kreisförmige Gestalt einnimmt.

## Claims

1. A vehicle (1) comprising at least two vehicle parts (2, 3) articulately connected with each other, e.g. a tramway or a bus, wherein a cover (20, 30) is provided for covering a gap between the two vehicle parts (2, 3), the cover being elastically resilient, wherein the cover made of a fabric is connected with at least one profile,
**characterized in that**
for a detachable connection of the cover made of a fabric with the at least one profile (25), the profile (25) comprises a groove (26), wherein the cover enclosed in the groove (26) is fixed there by means of a keder, wherein the at least one profile (25) can be attached to any place of the cover.

2. The vehicle (1) comprising at least two vehicle parts (2, 3) articulately connected with each other according to claim 1,
**characterized in that**
the cover (20, 30) has a planar design.

3. The vehicle (1) comprising at least two vehicle parts (2, 3) articulately connected with each other according to claim 1,
**characterized in that**
the cover (20) has a circumferential tunnel-shaped configuration.

4. The vehicle (1) comprising at least two vehicle parts (2, 3) articulately connected with each other according to one of the aforementioned claims,
**characterized in that**
the fabric is designed as a woven fabric, a warp-knitted fabric or a weft-knitted fabric, wherein the fabric is designed so as to be elastically resilient in at least one spatial direction.

5. The vehicle (1) comprising at least two vehicle parts (2, 3) articulately connected with each other according to one of the aforementioned claims,
**characterized in that**
the fabric is made of elastic threads.

6. The vehicle (1) comprising at least two vehicle parts (2, 3) articulately connected with each other according to one of the aforementioned claims,
**characterized in that**
the fabric is coated with an elastomer.

7. The vehicle (1) comprising at least two vehicle parts (2, 3) articulately connected with each other according to one of the aforementioned claims,
**characterized in that**
the keder (28) can be inserted into the profile (25).

8. The vehicle (1) comprising at least two vehicle parts (2, 3) articulately connected with each other according to one of the aforementioned claims,
**characterized in that**
the keder (28) can be pressed into the profile (25).

9. The vehicle (1) comprising at least two vehicle parts (2, 3) articulately connected with each other according to one of the aforementioned claims,
**characterized in that**
the profile (25) for receiving the keder (28) extends transversely to the longitudinal axis of the vehicle (1).

10. The vehicle (1) comprising at least two vehicle parts (2, 3) articulately connected with each other according to one of claims 3 to 9,
**characterized in that**
in a circumferential tunnel-shaped cover (20, 30), the profile (25) is closable.

11. The vehicle (1) comprising at least two vehicle parts (2, 3) articulately connected with each other according to one of the aforementioned claims,
**characterized in that**
the keder (28) is designed to be elastic.

12. The vehicle (1) comprising at least two vehicle parts (2, 3) articulately connected with each other according to one of the aforementioned claims,
**characterized in that**
the cover (20) comprises an internal bellows.

13. The vehicle (1) comprising at least two vehicle parts (2, 3) articulately connected with each other according to one of the aforementioned claims,
**characterized in that**
the tunnel-shaped cover (20) has a radial clearance relative to the outer wall of the vehicle (1), which corresponds to the radial extension of the tunnel-shaped cover (20), when the cover (20) has an approximately circular shape.

## Revendications

1. Véhicule (1) comprenant au moins deux parties de véhicule (2, 3) reliées de manière articulée, par exemple un tramway ou un bus, où une pièce de recouvrement (20, 30) élastiquement souple est prévue pour couvrir l'écartement entre les deux parties de véhicule (2, 3), où la pièce de recouvrement réalisée en une étoffe est reliée à au moins un profilé,
**caractérisé en ce que**
pour relier de manière détachable la pièce de recouvrement réalisée en une étoffe avec l'au moins un profilé (25), le profilé (25) comporte une rainure (26), où la pièce de recouvrement logée dans la rainure (26) est fixée par un bourrelet, où l'au moins un profilé (25) peut être attaché à n'importe quel endroit de la pièce de recouvrement.

2. Véhicule (1) comprenant au moins deux parties de véhicule (2, 3) reliées de manière articulée selon la revendication 1,
**caractérisé en ce que**
la pièce de recouvrement (20, 30) est réalisée de manière plane.

3. Véhicule (1) comprenant au moins deux parties de véhicule (2, 3) reliées de manière articulée selon la revendication 1,
**caractérisé en ce que**
la pièce de recouvrement (20) est réalisée en forme de tunnel périphérique.

4. Véhicule (1) comprenant au moins deux parties de véhicule (2, 3) reliées de manière articulée selon l'un des revendications précédentes,
**caractérisé en ce que**
l'étoffe est réalisée sous forme de tissu, de tricot chaîne ou tricot trame, où l'étoffe est réalisée de manière à être élastiquement souple dans au moins une direction spatiale.

5. Véhicule (1) comprenant au moins deux parties de véhicule (2, 3) reliées de manière articulée selon l'une des revendications précédentes,
**caractérisé en ce que**
l'étoffe est réalisée en fils élastiques.

6. Véhicule (1) comprenant au moins deux parties de véhicule (2, 3) reliées de manière articulée selon l'une des revendications précédentes,
**caractérisé en ce que**
l'étoffe est revêtue d'un élastomère.

7. Véhicule (1) comprenant au moins deux parties de véhicule (2, 3) reliées de manière articulée selon l'une des revendications précédentes,
**caractérisé en ce que**
le bourrelet (28) peut être enfilé dans le profilé (25).

8. Véhicule (1) comprenant au moins deux parties de véhicule (2, 3) reliées de manière articulée selon l'une des revendications précédentes,
**caractérisé en ce que**
le bourrelet (28) peut être enfoncé dans le profilé (25).

9. Véhicule (1) comprenant au moins deux parties de véhicule (2, 3) reliées de manière articulée selon l'une des revendications précédentes,
**caractérisé en ce que**
le profilé (25) destiné à recevoir le bourrelet (28) s'étend transversalement à l'axe longitudinal du véhicule (1).

10. Véhicule (1) comprenant au moins deux parties de véhicule (2, 3) reliées de manière articulée selon l'une des revendications 3 à 9,
**caractérisé en ce que**
dans le cas d'une pièce de recouvrement (20, 30) en forme de tunnel périphérique, le profilé (25) peut être fermé.

11. Véhicule (1) comprenant au moins deux parties de véhicule (2, 3) reliées de manière articulée selon l'une des revendications précédentes,
**caractérisé en ce que**
le bourrelet (28) est réalisé de manière élastique.

12. Véhicule (1) comprenant au moins deux parties de véhicule (2, 3) reliées de manière articulée selon l'une des revendications précédentes,
**caractérisé en ce que**
la pièce de recouvrement (20) comporte un soufflet disposé à l'intérieur.

13. Véhicule (1) comprenant au moins deux parties de véhicule (2, 3) reliées de manière articulée selon l'une des revendications précédentes,
**caractérisé en ce que**
la pièce de recouvrement (20) en forme de tunnel présente un écartement radial par rapport à la paroi extérieure du véhicule (1) correspondant à l'extension radiale de la pièce de recouvrement (20) en forme de tunnel, quand la pièce de recouvrement (20) prend une forme approximativement circulaire.
